# EUROPÄISCHE PATENTSCHRIFT

(11) **EP 0 835 374 B1**
(45) Veröffentlichungstag und Bekanntmachung des Hinweises auf die Patenterteilung: **12.09.2001**
(21) Anmeldenummer: 96913503.7
(22) Anmeldetag: 16.04.1996
(51) Int. Cl.: F02M 35/10

(54) **ANSAUGEINRICHTUNG AUS THERMOPLASTISCHEM KUNSTSTOFF**
INTAKE DEVICE MADE FROM THERMOPLASTIC SYNTHETIC MATERIAL
SYSTEME D'ADMISSION EN MATIERE THERMOPLASTIQUE

(30) Priorität: 30.06.1995 DE 19523870
(43) Veröffentlichungstag der Anmeldung: 15.04.1998
(73) Patentinhaber: FILTERWERK MANN & HUMMEL GmbH, 71631 Ludwigsburg (DE)
(72) Erfinder: MEHNE, Georg, D-74417 Gschwend (DE)
(74) Vertreter: Voth, Gerhard, Dipl.-Ing.
(86) Internationale Anmeldenummer: EP9601581
(87) Internationale Veröffentlichungsnummer: WO9702422

(56) Entgegenhaltungen:
- EP-A- 0 005 933
- WO-A-92/12845
- DE-A- 2 527 774
- DE-A- 3 216 980
- DE-A- 3 421 848
- FR-A- 2 100 027
- FR-A- 2 690 376
- US-A- 2 947 294
- PATENT ABSTRACTS OF JAPAN vol. 9, no. 176 (M-398) [1899] , 20.Juli 1985 & JP,A,60 045771 (THREE BOND), 12.März 1985,

## Beschreibung

Die Erfindung betrifft eine Ansaugeinrichtung aus thermoplastischem Kunststoff, insbesondere für die Ansaugluft einer Brennkraftmaschine, nach dem Oberbegriff des Hauptanspruchs.

Aus der Presseinformation der Bayer AG vom 3.11.1993 läßt sich entnehmen, daß ein einfaches Verfahren für die Herstellung von Ansaugstutzen für PKW darin besteht, Halbschalen im Spritzgießverfahren herzustellen. Jeweils zwei dieser Formteile werden in einem zweiten Spritzgießvorgang an den Berührungslinien mit Kunststoff so umspritzt, daß eine formschlüssige und dichte Verbindung entsteht. Diese Methode soll den Vorteil haben, daß Teile mit glatten Oberflächen entstehen. Dieses Verfahren wurde zwischenzeitlich weiterentwickelt und läßt sich mittlerweile bei einer Vielzahl von Ansaugrohren bzw. Ansaugeinrichtungen anwenden. Als Veribindungstechnik zwischen den beiden Halbschalen hat sich neben dem Umspritzen auch das Reibschweißverfahren bewährt.

Aus der EP 5933 B1 ist ein Saugrohr bekannt, welches ebenfalls aus zwei Halbschalen besteht. Diese werden miteinander verschweißt bzw. verklebt. Ein Nachteil dieser Halbschalentechnik ist darin zu sehen, daß sehr komplexe Rohrgeometrien das Verbinden der Halbschalen erheblich erschweren. Vor allem dort, wo sich Rohre überkreuzen bzw. ineinander verschlungen sind, ist eine Verbindung mittels Umspritzen oder Reibschweißen nicht mehr möglich. In diesen Fällen wurde die Technik des Kernausschmelzverfahrens angewendet, die allerdings einen höheren Aufwand erfordert.

Aus der DE 34 21 848 ist ein Luftsammler zu entnehmen. Dieser besteht aus einem relativ einfachen Aufbau, in welchem zwei aus jeweils zwei Halbschalen bestehende Ansaugstutzen enthalten sind. Die Ansaugstutzen verlaufen jeweils parallel und enden in einem Gehäuse. Ein Nachteil dieses Systems besteht darin, dass zusätzlich zu den Ansaugstutzen ein Gehäuse erforderlich ist, welches die Ansaugluft für die vier Ansaugstutzen bereit stellt.

Der Erfindung liegt daher die Aufgabe zu Grunde, eine Ansaugvorrichtung aus thermoplastischem Kunststoff zu schaffen, bei der trotz komplizierter Formen die Herstellung in der Halbschalentechnik möglich ist.

Diese Aufgabe wird ausgehend von dem Oberbegriff des Hauptanspruchs durch dessen kennzeichnende Merkmale gelöst.

Der wesentliche Vorteil der Erfindung besteht darin, dass die Ansaugeinrichtung aus zwei Saugrohren gebildet ist, wobei beide Saugrohre in Halbschalentechnik aufgebaut sind und das weitere Saugrohre mit dem ersten Saugrohr im Flanschbereich verbunden werden kann.

In einer Ausgestaltung der Erfindung münden beide Saugrohre in einen gemeinsamen Sammelraum, insbesondere in den Luftsammelraum, der einem Luftfilter nachgeschaltet ist.

In einer bevorzugten Weiterbildung sind die beiden Halbschalen in Kunststoffschweißtechnik miteinander verbunden. Hierbei hat sich die Reibschweißtechnik oder auch das Ultraschallschweißverfahren bewährt. Selbstverständlich besteht auch die Möglichkeit, die Halbschalen mittels des Umspritzverfahrens miteinander zu verbinden, ebenso mittels geeigneter Klebe- oder Fügetechnik.

In einer weiteren Ausgestaltung der Erfindung sind die Saugrohre in der Nähe des Anschlussflansches mit einer gemeinsamen, die Saugrohre verbindenden Öffnung versehen. In diese Öffnung wird eine Resonanzschaltklappe eingefügt, welche ab einer bestimmten Motordrehzahl die beiden Saugrohre strömungstechnisch koppelt und damit zu einer Leistungserhöhung des Motors im oberen Drehzahlbereich führt. Diese Verbindung kann gleichzeitig auch als Befestigungsstelle für beide Motorsaugrohe ausgestaltet sein und damit die Stabilität erhöhen.

In einer weiteren Ausgestaltung der Erfindung ist das zweite Saugrohr im Anschlussbereich mit einer Steckverbindung ausgestattet. Damit wird eine besonders einfache und auch zuverlässige Verbindung gewählt, die einen geringen Fertigungsaufwand erfordert.

Sofern das erste Saugrohr mit dem Anschlussflansch verbunden ist, eignet sich dieses auf Grund der höheren Stabilität als Träger für das zweite Saugrohr. Selbstverständlich ist es auch möglich, das zweite Saugrohr mit Trägerfunktionen auszustatten, die es ermöglichen das erste Saugrohr an dieses anzukoppeln.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Ausführungsbeispiels näher erläutert.
Es zeigen
- Figur 1: eine perspektivische Darstellung des ersten Saugrohrs,
- Figur 2: eine perspektivische Darstellung des zweiten Saugrohrs,
- Figur 3: die Kombination der beiden Saugrohre.

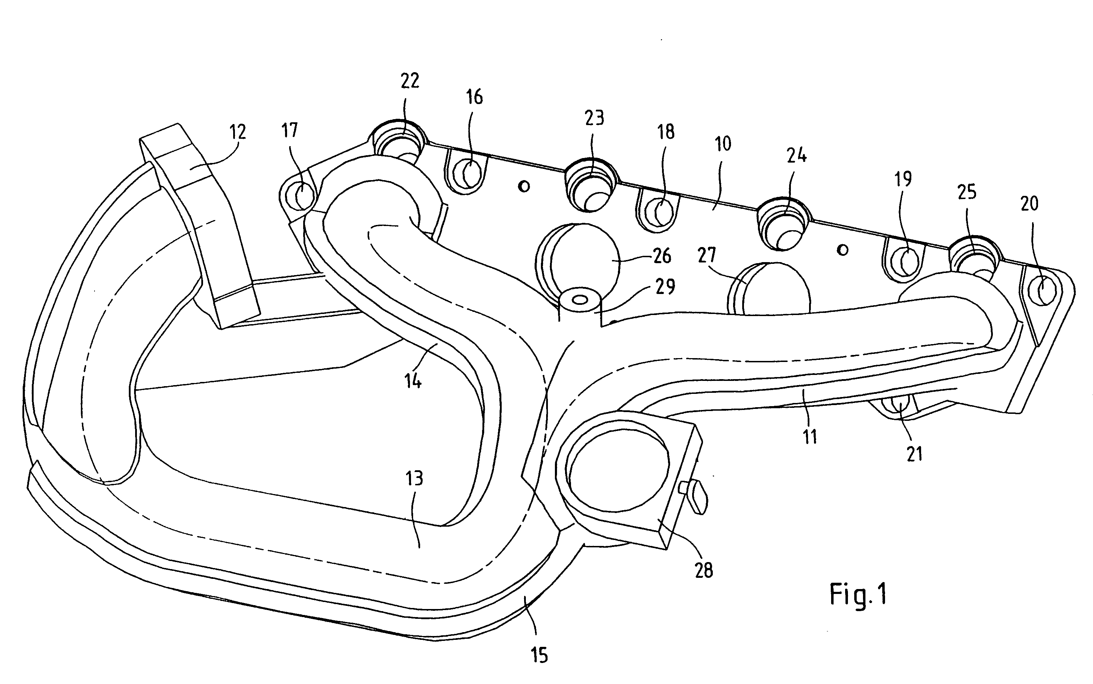

Die in Figur 1 gezeigte Ansaugeinrichtung besteht aus einem Anschlussflansch 10, welcher mit einer unteren Halbschale 11 eines Saugrohres verbunden ist. Der Anschlussflansch 10 und die untere Halbschale 11 sind ein einziges Spritzgießteil. An diesem ist weiterhin der Flansch 12 angeordnet. Auf der unteren Halbschale 11 ist die obere Halbschale 13 mittels Vibrationsschweißen befestigt. Die Befestigung erfolgt längs der Kontaktflächen 14, 15. Der Anschlußflansch 10 weist Befestigungsbohrungen 16, 17, 18, 19, 20, 21 sowie Bohrungen für die Einspritzdüsen 22, 23, 24, 25 und zwei Bohrungen zum Befestigen eines zweiten Saugrohres auf.

An der unteren Halbschale 11 des Saugrohres ist ferner ein Einschub 28 für eine Schaltklappe vorgesehen sowie ein Abstützelement 29.

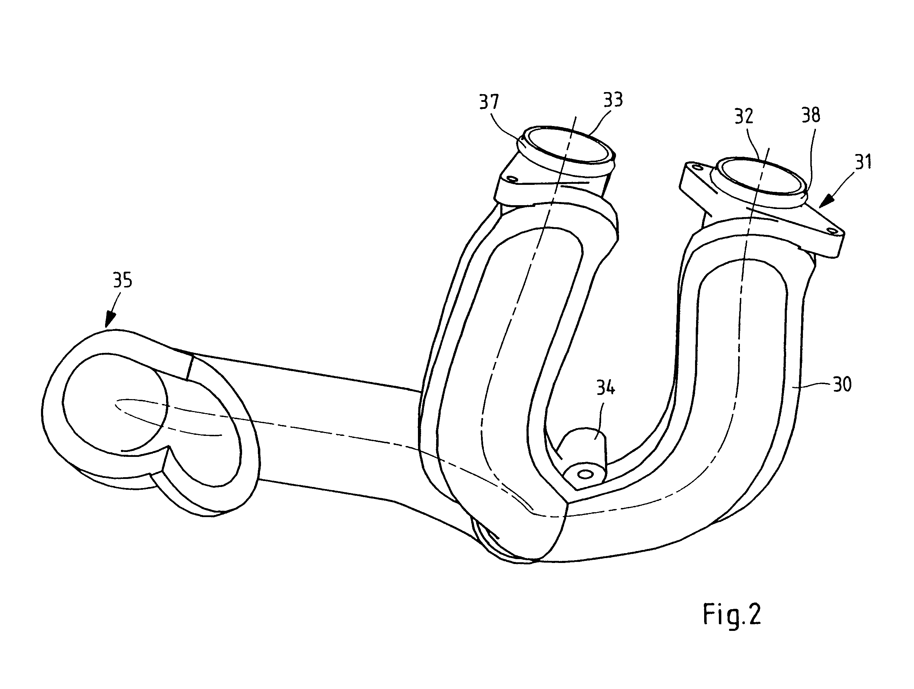

Figur 2 zeigt das Saugrohr, welches das in Figur 1 dargestellte Saugrohr ergänzt. Dieses ist ebenfalls in Zweischalentechnik aufgebaut und besteht aus einer unteren Halbschale 30 sowie aus einer oberen Halbschale 31, welche mit zwei Anschlußflanschstücken 32, 33 versehen ist. Auf den Anschlußflanschstücken sind 0-Ringe 37, 38 angeordnet. Diese Anschlußflanschstücke werden bei der Montage in die Öffnungen 26, 27 gemäß Figur 1 eingeführt.

Das zweite Saugrohr wird anschließend an dem Abstützelement 29 des ersten Saugrohres über die Öse 34 befestigt sowie die Flanschverbindung 35 im Bereich des Flansches 12 hergestellt.

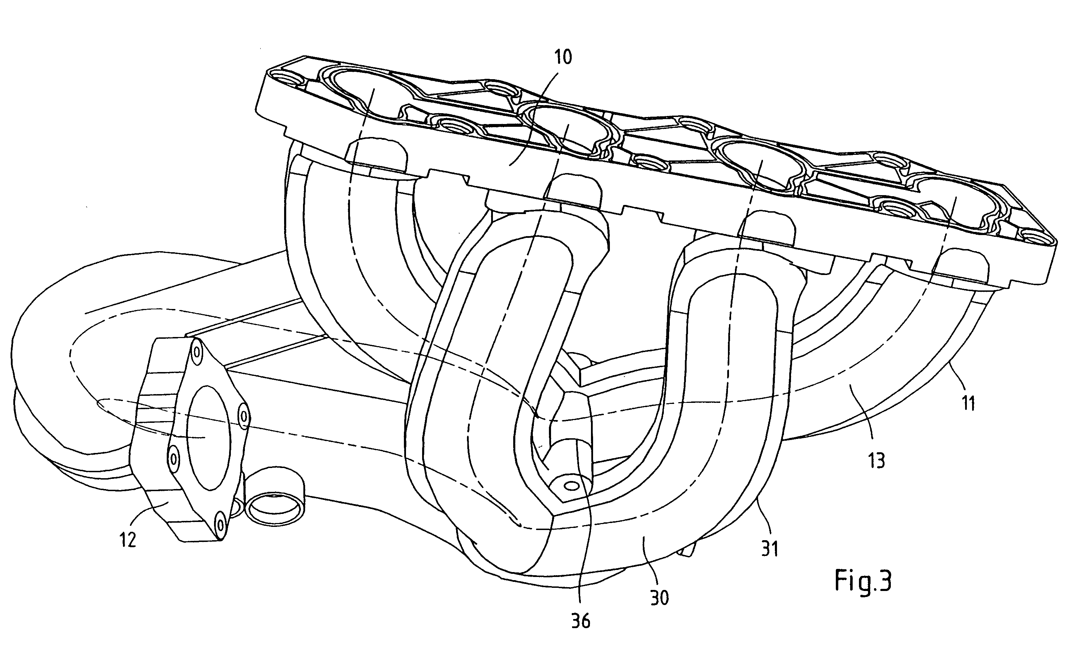

Figur 3 zeigt die komplett montierte Ansaugeinrichtung mit den vier Halbschalen 11, 13 sowie 30, 31. Aufgrund der Steckverbindung des zweiten Saugrohres am Anschlußflansch 10 sowie der Verbindung im Bereich 36 und der Befestigung des zweiten Saugrohres am Flanschbereich des Flansches 12 entsteht eine sehr starre Kopplung der beiden Saugrohre. Selbstverständlich besteht die Möglichkeit, mehrere Saugrohre zusammenzukoppeln. Außerdem besteht die Möglichkeit, auch bei einem V-Motor dieses System anzuwenden.

### Bezugszeichenliste

- 10: Anschlußflansch
- 11: untere Halbschale
- 12: Flansch
- 13: obere Halbschale
- 14: Kontaktfläche
- 15: Kontaktfläche
- 16: Befestigungsbohrung
- 17: Befestigungsbohrung
- 18: Befestigungsbohrung
- 19: Befestigungsbohrung
- 20: Befestigungsbohrung
- 21: Befestigungsbohrung
- 22: Bohrung
- 23: Bohrung
- 24: Bohrung
- 25: Bohrung
- 26: Bohrung
- 27: Bohrung
- 28: Einschub
- 29: Abstützelement
- 30: untere Halbschale
- 31: obere Halbschale
- 32: Flanschstück
- 33: Flanschstück
- 34: Öse
- 35: Flanschverbindung
- 36: Bereich
- 37: O-Ring
- 38: O-Ring

## Patentansprüche

1. Ansaugeinrichtung aus thermoplastischem Kunststoff für die Ansaugluft einer Brennkraftmaschine, bestehend aus einem Saugrohr mit einer oberen und einer unteren Halbschale (11, 13), welche miteinander verbunden sind und einen gemeinsamen Flansch (12) aufweisen, wobei wenigstens ein weiteres, aus einer oberen und unteren Halbschale (30, 31) bestehendes Saugrohr vorgesehen ist, **dadurch gekennzeichnet, daß** das weitere Saugrohr ebenfalls in den gemeinsamen Flansch (12) in einem gemeinsamen Querschnitt mündet, wobei das weitere Saugrohr an einem Abstützelement (29) des ersten Saugrohres befestigt ist und über eine Flanschverbindung (35) die Verbindung mit dem ersten Saugrohr im Bereich des Flansches (12) erfolgt.

2. Ansaugeinrichtung nach Anspruch 1, **dadurch gekennzeichnet, daß** das erste und zweite Saugrohr in einen gemeinsamen Sammelraum münden.

3. Ansaugeinrichtung nach Anspruch 1 oder 2, **dadurch gekennzeichnet, daß** die beiden Halbschalen (11, 13, 30, 31) in Kunststoffschweißtechnik miteinander verbunden sind.

4. Ansaugeinrichtung nach einem der vorherigen Ansprüche, **dadurch gekennzeichnet, daß** die beiden Saugrohre eine Verbindungsöffnung (28) aufweisen, welche mit einer Resonanzschaltklappe versehen ist.

5. Ansaugeinrichtung nach einem der vorherigen Ansprüche, **dadurch gekennzeichnet, daß** das zweite Saugrohr in einem Anschlußschflansch (10) mit einer Steckverbindung befestigt ist.

6. Ansaugeinrichtung nach einem der vorherigen Ansprüche, **dadurch gekennzeichnet, daß** das erste Saugrohr den Träger für das zweite Saugrohr darstellt.

## Claims

1. Intake apparatus, formed from thermoplastic plastics material, for the intake air of an internal combustion engine, comprising an induction manifold having an upper and a lower half-shell (11, 13), which are interconnected and have a common flange (12), at least one additional induction manifold being provided, which comprises an upper and lower half-shell (30, 31), **characterised in that** the additional induction manifold also terminates in the common flange (12) in a common cross-section, the additional induction manifold being mounted on a supporting element (29) of the first induction manifold, and the connection with the first induction manifold being effected in the region of the flange (12) via a flanged joint (35).

2. Intake apparatus according to claim 1, **characterised in that** the first and second induction manifolds terminate in a common collecting chamber.

3. Intake apparatus according to claim 1 or 2, **characterised in that** the two half-shells (11, 13, 30, 31) are interconnected by a plastics material welding technique.

4. Intake apparatus according to one of the previous claims, **characterised in that** the two induction manifolds have a connection aperture (28), which is provided with a resonance switching flap.

5. Intake apparatus according to one of the previous claims, **characterised in that** the second induction manifold is mounted in a connection flange (10) with a plug-in connection.

6. Intake apparatus according to one of the previous claims, **characterised in that** the first induction manifold represents the support for the second induction manifold.

## Revendications

1. Système d'admission en matière thermoplastique, destiné à l'air aspiré dans un moteur à combustion interne, composé d'une tubulure d'admission faite de demi-coquilles supérieure et inférieure (11, 13) reliées entre elles et présentant une bride commune (12), au moins une autre tubulure d'admission composée de demi-coquilles supérieure et inférieure (30, 31) étant également prévue,
**caractérisé en ce que**
l'autre tubulure d'admission débouche également dans la bride commune (12) au niveau d'une section commune, elle est fixée à un élément de soutien (29) de la première tubulure et la liaison avec la première tubulure s'effectue par une liaison de bride (35) dans la zone de la bride (12).

2. Système selon l'une quelconque des revendications 1 ou 2,
**caractérisé en ce que**
la première et la seconde tubulure d'admission débouchent dans une chambre collectrice commune.

3. Système selon l'une quelconque des revendications 1 ou 2,
**caractérisé en ce que**
les deux demi-coquilles (11, 13, 30, 31) sont reliées entre elles par une technique de fusion des matières plastiques.

4. Système selon l'une quelconque des revendications 1 ou 2,
**caractérisé en ce que**
les deux tubulures d'admission présentent une ouverture de liaison (28) équipée d'un clapet de commutation à résonance.

5. Système selon l'une quelconque des revendications précédentes,
**caractérisé en ce que**
la seconde tubulure d'admission est fixée dans une bride de raccordement (10) par une liaison par emmanchement.

6. Système selon l'une quelconque des revendications précédentes,
**caractérisé en ce que**
la première tubulure d'admission constitue le support de la seconde tubulure.
